# EUROPEAN PATENT SPECIFICATION

(11) **EP 4 446 119 B1**
(45) Date of publication and mention of the grant of the patent: **14.10.2026**
(21) Application number: 24169188.0
(22) Date of filing: 09.04.2024
(51) Int. Cl.: B41J 2/175

(54) **CARTRIDGE AND CARTRIDGE RECYCLING METHOD**
KARTUSCHE UND KARTUSCHENRECYCLINGVERFAHREN
CARTOUCHE ET PROCÉDÉ DE RECYCLAGE DE CARTOUCHE

(30) Priority: 14.04.2023 JP 2023066411; 01.03.2024 JP 2024031334
(43) Date of publication of application: 16.10.2024
(73) Proprietor: CANON KABUSHIKI KAISHA, Tokyo 146-8501 (JP)
(72) Inventor: NANJO, Tatsuo, Tokyo, 146-8501 (JP); TAKAHASHI, Wataru, Tokyo, 146-8501 (JP); KONDO, Soji, Tokyo, 146-8501 (JP); IINUMA, Keisuke, Tokyo, 146-8501 (JP); NAKAJIMA, Takayuki, Tokyo, 146-8501 (JP)
(74) Representative: Canon Europe Limited

(56) References cited:
- WO-A1-2008/101380
- US-A1- 2003 058 315
- US-B2- 7 384 137

## Description

### BACKGROUND

### Field of the Invention

The present disclosure relates to a cartridge to be detachably mounted on an inkjet printing apparatus which contains a liquid such as ink.

### Description of the Related Art

A type of cartridge for printing has been known in which a printing unit that ejects a printing agent and a liquid chamber containing the printing agent by letting an absorber absorb it are combined together. Japanese Patent Laid-Open No. H10-95128 (hereinafter, referred to as Literature 1) discloses an example of a cartridge which has an ink absorber inside a main body member and supplies an ink held in the ink absorber to a printing element substrate through a filter and an ink channel. In Literature 1, a lid member is welded to an opening of the main body member to define an internal space. This type of cartridge is replaced with a new cartridge in a case where the originally contained ink runs out.

However, a configuration such as the one in Literature 1 has a possibility that detaching the lid member from the opening of the main body member forms asperities on the lid member or at the opening of the main body member, making it impossible to weld the lid member again, which makes the configuration not suitable for recycling.
US 2003/058315 A1 describes an ink cartridge including an ink storage chamber in which ink is stored, a cover to cover the upper portion of the ink storage chamber and a head to eject ink droplets in the ink storage chamber onto a recording medium, wherein the cover includes an inner cover to cover the upper portion of the ink storage chamber and an outer cover that seals the ink storage chamber and the inner cover, and is positioned at a predetermined distance above the inner cover. Also described are plates to form zigzag air passages by blocking a space between the inner cover and the outer cover.
WO 2008/101380 A1 describes a method for reconstructing an ink cartridge that includes several processing steps that are successive in order. First of all, a lid of the ink cartridge is detached, and porous fibrous members in ink-storing chambers are taken out. Then, an extending plate that shapes as a separating plate in an internal chamber of the ink cartridge and extends toward the lid is additionally provided at a side of the separating plate facing toward the lid. The extending plate hermetically connects with the separating plate and corresponding parts of the internal chamber of the ink cartridge. Under the assembled condition, the side of the extending plate facing toward the lid keeps a hermetically contacting state with an inner wall of the lid facing the internal chamber of the ink cartridge. Finally, porous fibrous members respectively matching with the ink-storing chambers are placed into corresponding chambers, and the lid is attached.
US 7 384 137 B2 describes an ink jet cartridge lid with a body having a first planar side and a second planar side opposite the first side. The first side has a raised portion having a first angled end wall and a second angled end wall. A third, side wall and a fourth, side wall each connect the first end wall to the second end wall of the lid. The lid is installed onto an ink jet cartridge having an open-ended cavity and a foam insert disposed therein.

### SUMMARY

The present invention in its first aspect provides a cartridge as specified in claims 1-11. The present invention in its second aspect provides a cartridge recycling method as specified in claim 12.

Further features of the present invention will become apparent from the following description of exemplary embodiments with reference to the attached drawings.

### BRIEF DESCRIPTION OF THE DRAWINGS

Fig. 1 is a schematic view of a printing apparatus of the present disclosure;
Fig. 2 is an exterior perspective view of a cartridge of a printing apparatus according to a first embodiment;
Fig. 3 is an exploded perspective view of the cartridge of the printing apparatus according to the first embodiment;
Fig. 4 is a cross-sectional view of the cartridge of the printing apparatus according to the first embodiment;
Fig. 5 is a plan view of a lid member of the cartridge of the printing apparatus according to the first embodiment facing a partition member;
Figs. 6A and 6B are a top view and a bottom view of the partition member of the cartridge of the printing apparatus according to the first embodiment;
Fig. 7 is a side view of the lid member and the partition member of the cartridge of the printing apparatus according to the first embodiment combined together;
Figs. 8A to 8C are a bottom view, a partial enlarged view, and a cross-sectional view of the lid member and the partition member of the cartridge of the printing apparatus according to the first embodiment combined together;
Fig. 9 is a side view of the lid member and the partition member of the cartridge of the printing apparatus according to the first embodiment combined together;
Fig. 10 is a flowchart illustrating a process of recycling the cartridge of the printing apparatus according to the first embodiment;
Fig. 11 is an exploded perspective view illustrating a modification of the cartridge of the printing apparatus according to the first embodiment;
Fig. 12 is an exploded perspective view of a cartridge of a printing apparatus according to a second embodiment;
Fig. 13 is a schematic cross-sectional view of the cartridge of the printing apparatus according to the second embodiment;
Figs. 14A to 14C are a bottom view, a partial enlarged view, and a cross-sectional view illustrating a modification representing a lid member and a partition member of a cartridge of a printing apparatus according to a third embodiment combined together;
Fig. 15 is a schematic cross-sectional view illustrating a tank of a cartridge of a printing apparatus according to the present disclosure; and
Figs. 16A to 16C are explanatory views of a cartridge representing a comparative example.

### DESCRIPTION OF THE EMBODIMENTS

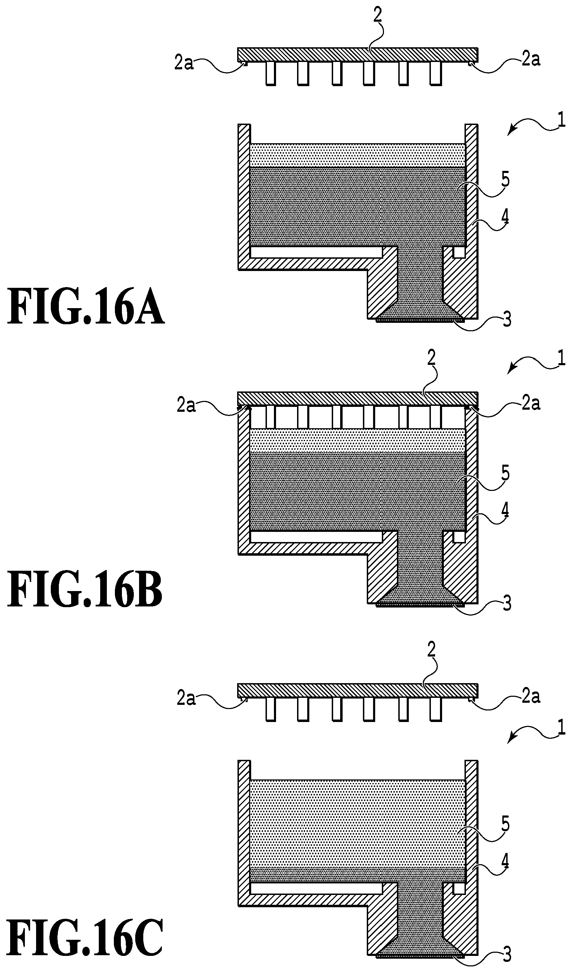

The reason for a difficulty in a manufacturing process will now be described using Figs. 16Ato 16C. Fig. 16A is a schematic cross-sectional view of the cartridge disclosed in Literature 1 before use, illustrating a state before welding the lid member. Fig. 16B illustrates a state after welding the lid member. Fig. 16C illustrates a state a lid member 2 has been detached from a cartridge 1 after use. To manufacture the cartridge, an absorber 5 is inserted into a tank 4 to which a print head 3 has been attached. Then, after an ink is introduced, the lid member 2 is welded. As the lid member 2 is welded, a welding rib 2a fuses to an opening portion of the tank 4. As a result, the lid member 2 gets fixed to the tank 4. Thereafter, after the ink has been consumed, the cartridge 1 is collected as a used cartridge and then manufactured as a recycled cartridge.

The lid member and the tank are both made of plastic, and are welded to each other by pressing the welding rib provided to the lid into abutment with the tank's welding surface, and vibrating the lid in this state at a high frequency, thereby fusing the abutting portions to each other with frictional heat or the like. To ensure that the entire circumference of the tank is tightly closed with the lid, it is necessary to sufficiently melt the welding rib to give a sufficient fusing margin.

In a case where the used cartridge is left in a state of having run out of the ink for a long time, the residual ink remaining in a very small amount inside the absorber solidifies and causes clogging. This leads to a possibility of leakage of the ink introduced into the tank again.

Considering such a circumstance, the cartridge recycling requires taking out the absorber and cleaning it or replacing it with a new one. To replace the absorber, it is necessary to detach the welded lid member, but reusing the detached lid member can be difficult in some cases.

The welding rib of this detached lid member has partly lost its height. Thus, in a case of re-welding the detached lid member to the tank, it may not be possible to melt the welding rib in a sufficient volume, which may cause leakage. To handle this problem, one may consider forming a welding rib that is originally tall in anticipation of the fact that welding will be performed several times to reuse the lid member. In this approach, the height of the cartridge itself changes according to the number of times the lid member is to be reused. Thus, there is a possibility of another problem that an attachment failure of the cartridge to the printing apparatus may occur.

Considering the above points, it would be difficult to reuse the lid member disclosed in Literature 1, and the detached lid member will be discarded. This, however, is hardly environmentally friendly in terms of reducing waste plastic. In addition, the recycling rate representing the ratio between the weight of the parts of the collected cartridge excluding the ink and the weight of the parts reused in the recycled cartridge is also low. Thus, there is a possibility that the recycled cartridge is not accepted as "recycled" in the market.

Embodiments of the present disclosure will be described in detail below with reference to drawings.

### (First Embodiment)

### <General Description of Inkjet Printing Apparatus>

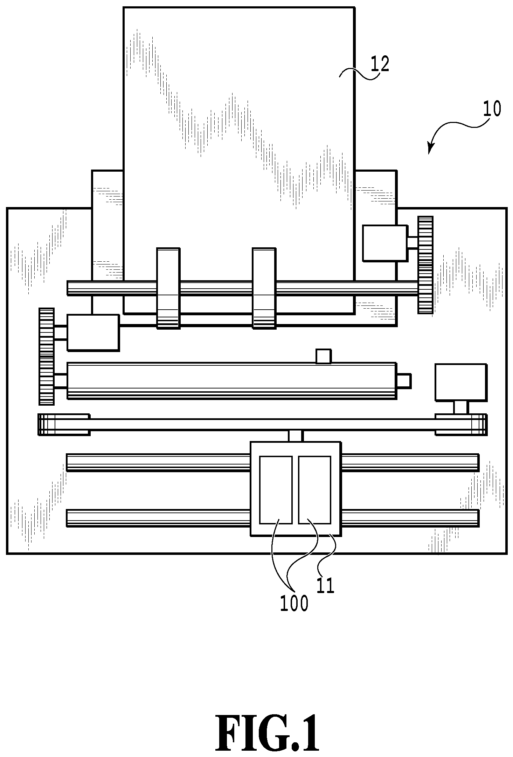

Fig. 1 illustrates a schematic view of an inkjet printing apparatus according to a first embodiment. An inkjet printing apparatus 10 (hereinafter referred to also as "printing apparatus") is an on-carriage type employing a serial printing method, and includes a cartridge 100 and a carriage 11. The cartridge 100 is mounted on the carriage 11. In the printing apparatus 10, the carriage 11 moves reciprocally, and a printing sheet 12 is conveyed by a predetermined distance in a direction orthogonal to the reciprocal movement of the carriage. The cartridge ejects ink onto the printing paper 12 to form an image on the printing sheet 12.

### <General Description of Cartridge>

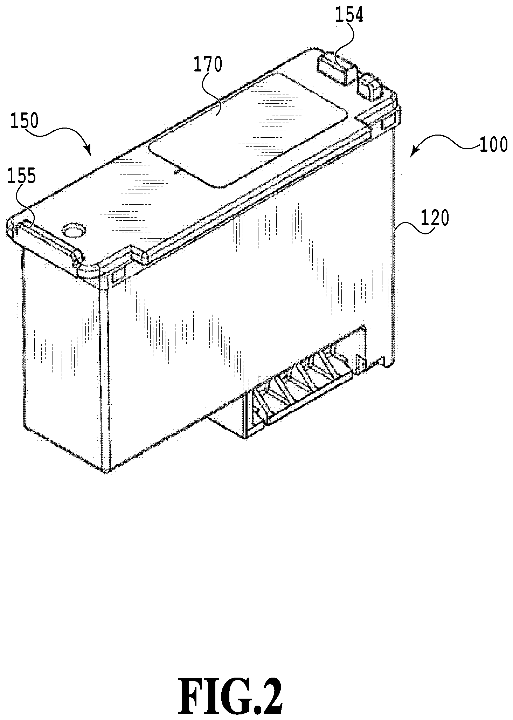

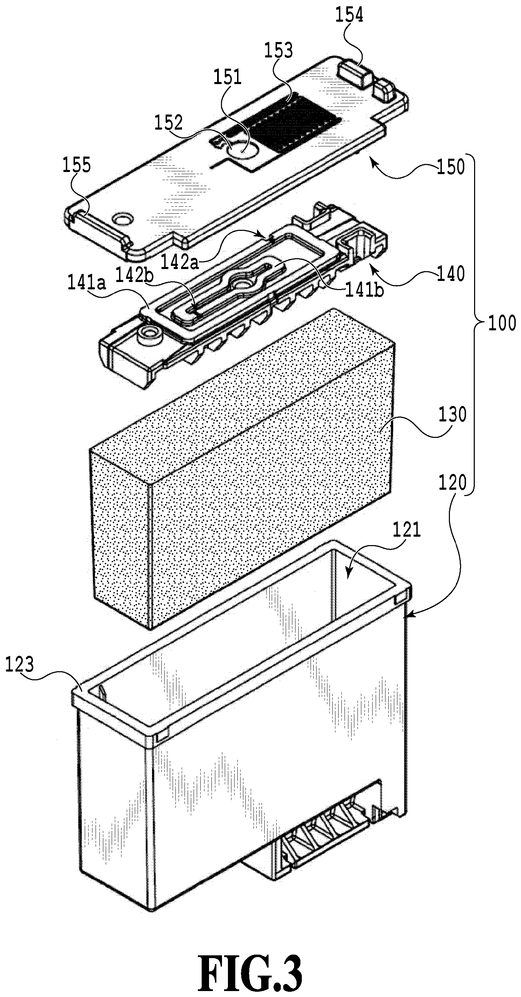

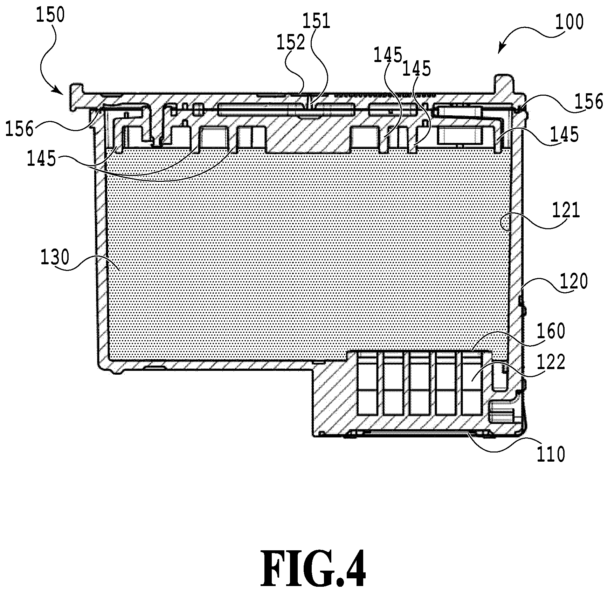

Fig. 2 illustrates a perspective view of the cartridge according to the first embodiment. Fig. 3 illustrates an exploded perspective view of the cartridge according to the first embodiment. Fig. 4 illustrates a cross-sectional view of the cartridge according to the first embodiment. The cartridge 100 is of a type that contains an ink of one color inside, and is generally a cartridge for a black ink. The present disclosure is applicable also to a type that contains inks of multiple colors, generally cartridges for chromatic color inks (cyan, magenta, yellow). In the present embodiment, a cartridge for a black ink is used to perform printing.

The cartridge 100 includes a print head 110 that ejects the ink, a tank 120 that contains the ink, an absorber 130 that absorbs and holds the ink, and a partition member 140 that presses the absorber 130. The cartridge 100 also includes a lid member 150 joined to the tank 120, and filters 160 that remove foreign substances inside the tank 120. The print head 110 is configured to eject the ink based on ejection data, and disposed at the bottom surface of the tank 120 on the lower side in the vertical direction. The absorber 130 is made of a fibrous material, a porous material, or the like, and is capable of holding the ink inside with capillary forces acting thereon. The absorber 130 is accommodated in an absorber chamber 121 of the tank 120 in abutment with the filters 160, which are for removing foreign substances. The ink inside the tank 120 and the absorber 130 fluidly communicates with the print head 110 through the filters 160 and ink channels 122. With such a configuration, the ink inside the absorber 130 can be supplied to the print head 110, thus making it possible to perform printing. The lid member 150 is disposed so as to close the opening of the tank 120, and defines the absorber chamber 121 with the tank 120. The lid member 150 has an atmosphere communication port 151, and allows air to be taken in therethrough from the outside as the ink inside the tank 120 is consumed by printing. The partition member 140 is disposed between the absorber 130 and the lid member 150, and holds the absorber 130 so as to fix it while pressing it. In the present disclosure, a cartridge in which a print head, a tank, and the like are integrated with one another is used, but the cartridge is not limited to this type. The print head, the tank, and the like do not have to be integrated with one another. Details of the lid member 150 and the partition member 140 will be described later.

### (Description of Lid Member and Partition Member)

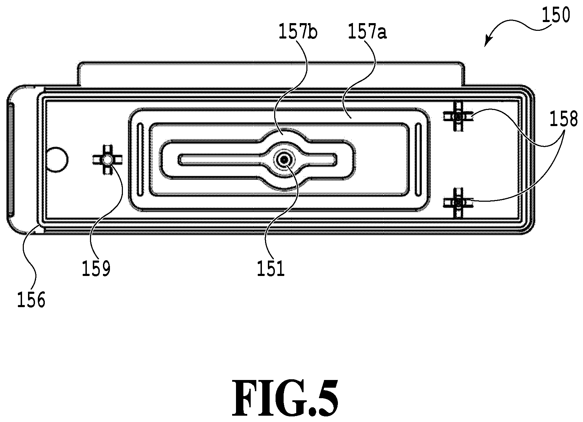

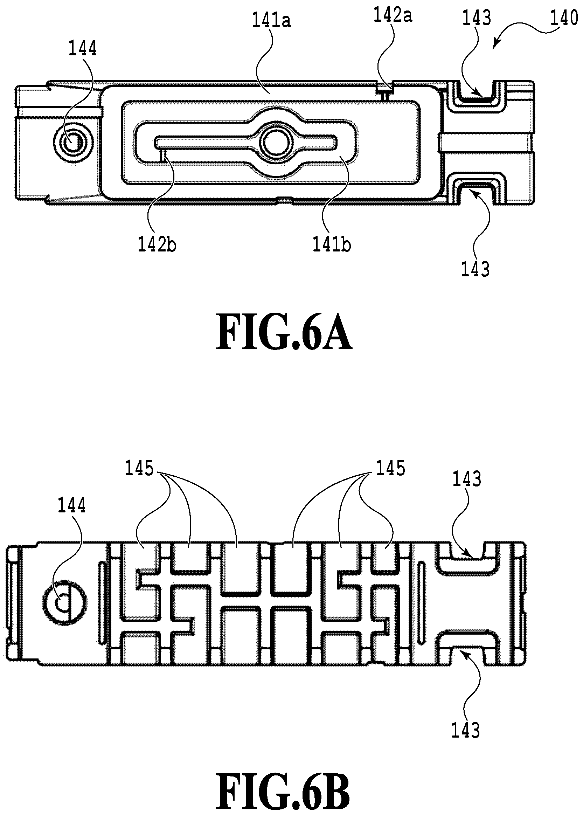

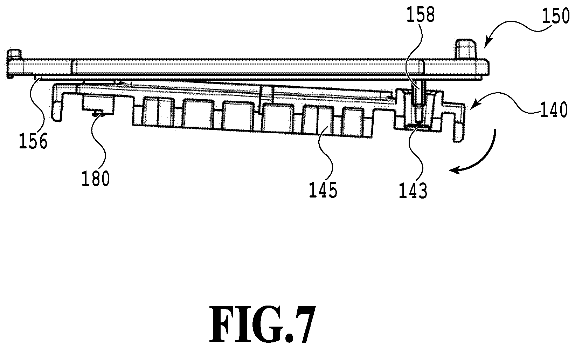

Next, the lid member 150 and the partition member 140 of the cartridge according to the present embodiment will be described using Figs. 2 to 7. Fig. 5 is a plan view illustrating the side of the lid member 150 facing the partition member 140. Fig. 6A is a plan view of the side of the partition member 140 facing the lid member 150. Fig. 6B is a plan view illustrating the side of the partition member 140 facing the absorber 130. Fig. 7 is a schematic side view of the lid member 150 and the partition member 140 combined together by being fixed to each other by riveting.

The atmosphere communication port 151 is provided on the outer side of the lid member 150 substantially at the center of the lid member 150, and a circular recess 152 (see Fig. 3) is formed around the atmosphere communication port 151. An atmosphere communication groove 153 is formed so as to communicate with the circular recess 152. An adhesive label 170 is attached to the lid member 150 so as to cover the atmosphere communication port 151, the circular recess 152, and the atmosphere communication groove 153. In this way, the ink inside the cartridge is unlikely to leak or evaporate while the cartridge is transported or before it is used. Moreover, the lid member 150 has a main body fixing portion 154 protruding from its outer side. Engaging the main body fixing portion 154 with a fixing portion (not illustrated) of the carriage 11 allows the cartridge 100 to be precisely fixed to the carriage 11. Furthermore, the lid member 150 has a gripping portion 155 protruding from its outer side at the opposite position from the main body fixing portion 154. By gripping this, the user can properly hook the user's finger on the lid member 150 and lift up the cartridge 100 mounted on the carriage 11 without slippage.

On the surface of the lid member 150 facing the partition member 140, there is formed a welding rib 156 protruding along the outer shape of the lid member 150. The lid member 150 is welded to the tank 120 by melting the welding rib 156 of the lid member 150. Specifically, by pressing the welding rib 156 of the lid member 150 and a welding surface 123 (see Fig. 3) of the tank into abutment with each other and vibrating the lid member 150 at a high frequency in this state, the abutting portions generate frictional heat, so that the welding rib 156 and the welding surface 123 get fused to each other. This welding tightly closes the absorber chamber 121. Note that the materials of the lid member 150 and the tank 120 are the same type of plastic, and its melting temperature is higher than that of the material of the welding rib 156. Once the lid member 150 is welded, the lid member 150 presses (exerts a force on) the partition member 140, and the partition member 140 in turn presses the absorber 130. By this pressing, the absorber 130 is held in abutment with the filters 160 inside the absorber chamber 121. In this way, the absorber 130 will not move inside the absorber chamber 121 even in a case where the cartridge 100 receives an impact or vibrations.

As illustrated in Fig. 5, on the surface of the lid member 150 facing the partition member 140, there are a first lid member wall rib 157a formed so as to surround the atmosphere communication port 151 with a large gap therebetween, and a second lid member wall rib 157b formed inside the first lid member wall rib 157a. As illustrated in Fig. 6, on the partition member 140, there are a first partition member wall rib 141a and a second partition member wall rib 141b formed so as to be surrounded by the first partition member wall rib 141a. Moreover, absorber holding ribs 145 (protruding portions) are formed on the surface of the partition member 140 facing the absorber 130. The absorber holding ribs 145 are formed in a lattice pattern. The first lid member wall rib 157a and the first partition member wall rib 141a are provided at the same position relative to each other. The second lid member wall rib 157b and the second partition member wall rib 141b are provided at the same position relative to each other. By welding the lid member 150, the first lid member wall rib 157a and the first partition member wall rib 141a abut on each other. Moreover, the second lid member wall rib 157b and the second partition member wall rib 141b abut on each other, and the absorber holding ribs 145 of the partition member 140 and the absorber 130 abut on each other. As a result, the pressing mentioned above is propagated.

The first lid member wall rib 157a (see Fig. 5) and the first partition member wall rib 141a (see Fig. 6) abut on each other to form a blocking wall that prevents ink leakage. Also, the second lid member wall rib 157b and the second partition member wall rib 141b abut on each other to form a blocking wall that prevents ink leakage. A notch 142a is formed at a portion of the first partition member wall rib 141a. Also, a notch 142b is formed at a portion of the second partition member wall rib 141b. In this way, the atmosphere communication port 151 and the inside of the absorber chamber 121 communicate with each other through the notches 142a and 142b in the two layers of blocking walls.

As illustrated in Fig. 6B, the absorber holding ribs 145 have such a shape as to partly abut on the absorber 130. In this way, the ink leaking out of the absorber 130 in response to pressing the absorber 130 will flow into the portions of the absorber holding ribs 145 out of abutment with the absorber 130. This prevents leakage of that ink.

The partition member 140 has an elongated shape. For example, the partition member measures 15.2 mm in the transverse direction and 64 mm in the longitudinal direction. The aspect ratio of the partition member 140 in this case (the ratio of the width to the length in this case) is 1: 4. Although the partition member 140 has an elongated shape, the lattice pattern of the absorber holding ribs 145 provides a strong structure that is resistant to deformation. The shape of the partition member 140, which is strong, makes it possible to downsize most of the members of the cartridge 100.

In a case where the cartridge 100 receives impacts, such as vibrations, and/or an environmental change, such as a temperature change or an atmospheric pressure change, occurs, there is a possibility of leakage of the ink inside the cartridge 100 from the atmosphere communication port. In particular, when collected after use, the cartridge 100 may receive more intense impacts and greater environmental changes than during its general transport. Accordingly, there is a possibility of leakage of the ink remaining inside from the atmosphere communication port 151. To prevent this leakage, the blocking walls are provided, which are formed by bringing the first lid member wall rib 157a and the first partition member wall rib 141a into abutment with each other and the second lid member wall rib 157b and the second partition member wall rib 141b into abutment with each other.

Also, in the present embodiment, positioning pins 158 are formed on the lid member 150 (see Fig. 5), and positioning ports 143 to insert the positioning pins 158 are formed in the partition member 140. This makes it easier to bring the first lid member wall rib 157a and the first partition member wall rib 141a into abutment with each other and bring the second lid member wall rib 157b and the second partition member wall rib 141b into abutment with each other.

Moreover, considering the handling in the production, it is preferable that the lid member 150 and the partition member 140 be combined together. However, the lid member 150 and the partition member 140 will be separated from each other in a case of recycling the cartridge, which will be described later. Thus, it is desirable that the lid member 150 and the partition member 140 be combined together only to such an extent that they are separable. For this reason, according to the invention, the lid member 150 includes a riveting pin 159 (see Fig. 5), and the partition member 140 includes a riveting opening 144 (see Fig. 6A, etc.). In this way, the riveting pin 159 of the lid member 150 can be fixed to the riveting opening 144 of the partition member 140 by heat riveting. In the heat riveting, the diameter of a riveted portion 180 of the riveting pin 159 is made slightly larger than the diameter of the riveting opening 144. This enables the partition member 140 to be loosely caught. Only one riveting position is provided at a longitudinal end of the partition member 140. Since the ends of the lid member 150 and the partition member 140 on one side are fixed to each other at the riveting position, the other ends of the lid member 150 and the partition member 140 get separated from each other in a case where the lid member 150 is detached from the tank 120. By holding and turning the partition member 140 in the above state in the direction of the arrow in Fig. 7, the riveted portion 180 is subjected to a force (moment) as if from a bottle opener. Thus, the lid member 150 and the partition member 140 can be separated with a very small force. While the configuration in which the lid member 150 and the partition member 140 are combined together has been described so far, this is intended to improve the handling in the production. The advantage of the present disclosure can be achieved without combining them together, as a matter of course.

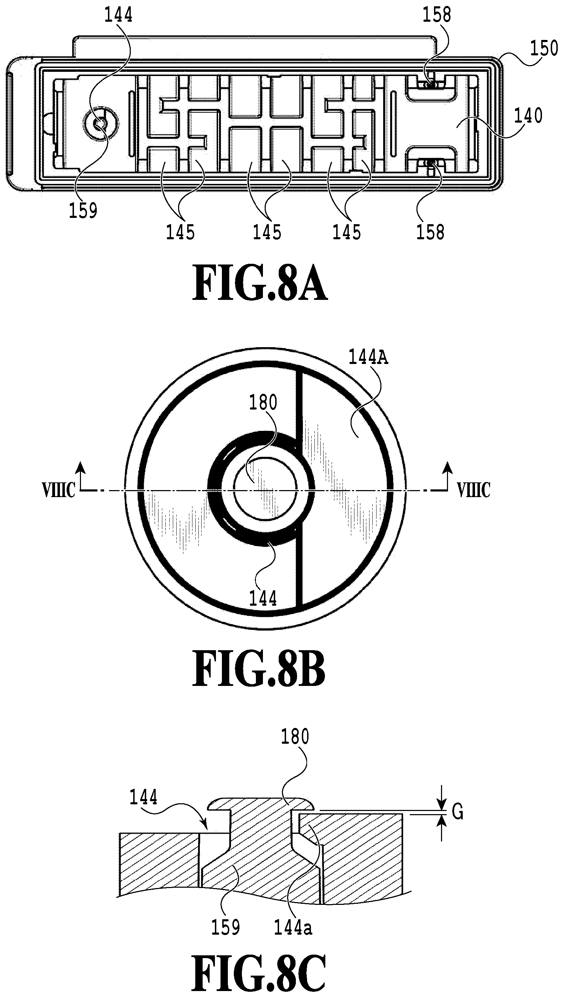

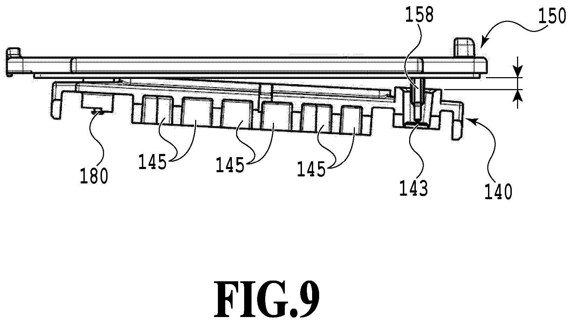

An example of the heat riveting of the lid member 150 and the partition member 140 has been briefly described above. The configuration in the present embodiment in which the lid member 150 and the partition member 140 are fitted to each other by heat riveting will now be described in detail with reference to Figs. 8A to 8C and 9.

Fig. 8A is a bottom view of the lid member and the partition member of the cartridge of the printing apparatus according to the first embodiment combined together. Fig. 8B is a partial enlarged view of the lid member and the partition member in Fig. 8A at the riveting position. Fig. 8C is a cross-sectional view taken along the VIIIC-VIIIC line in Fig. 8B. Fig. 9 is a side view of the lid member and the partition member of the printing apparatus according to the first embodiment combined together.

The partition member 140 is combined to the lid member 150. The pair of positioning pins 158 and the riveting pin 159 are formed on the lid member 150. In the partition member 140, there are formed the positioning ports 143, which correspond to the pair of positioning pins 158, the riveting opening 144, into which the riveting pin 159 can be inserted, and a catch portion 144A. The riveting pin 159 of the lid member 150 is inserted into the riveting opening 144 and then the tip of the riveting pin 159 is riveted by heating to form the riveted portion 180. In this way, the riveted portion 180 gets caught on the catch portion 144A of the partition member 140, thus fixing the partition member 140. With the above configuration, the lid member 150 and the partition member 140 are fixed in the horizontal direction on the sheet of Fig. 8C and also in the direction from the near side toward the far side by the riveting pin 159. The lid member 150 and the partition member 140 are also fixed in the vertical direction of the sheet of Fig. 8C by the riveted portion 180 at the tip of the riveting pin 159 and the catch portion 144A of the partition member 140. Also, as illustrated in Fig. 8C, a gap G can be provided between the lid member 150 and the partition member 140. A tool can be inserted in that gap G to separate the lid member 150 and the partition member 140 from each other. From the viewpoint of recyclability, the more easily breakable is the hooking shape for fixing the lid member 150 and the partition member 140, such as the riveted portion 180, the better. In the present embodiment, as illustrated in Fig. 8B, the catch portion 144A has a semi-circular shape and is configured to catch only a portion of the riveted portion 180. Thus, in a case of separating the lid member 150 and the partition member 140 from each other for recycling, it is only necessary to break only part of the riveted portion 180. This makes the separation easy. The gap G is present between the riveted portion 180 after the heat riveting and the catch portion 144A of the partition member 140, and prevents deformation of the partition member 140 when the lid member 150 and the partition member 140 are separated from each other for cartridge recycling.

### (Comparative Example of Absorber Cleaning Method)

The present disclosure is intended to make an absorber in a used cartridge clean and free from clogging. While a comparative example proposes an absorber cleaning method in which an absorber is cleaned without a lid detached, the present embodiment does not employ this method. The reasons for this will now be described.

The comparative example of the method of cleaning a used absorber includes the method disclosed in Japanese Patent Laid-Open No. 2000-238283, for instance. In this cleaning method, a cleaning liquid is introduced into a porous body (hereinafter "absorber") from hollow needles and discharged from ink supply ports (head) to clean the absorber. This cleaning method has the advantage of implementing recycling at a low cost in a very simple manner. With this cleaning method, however, it is sometimes difficult to thoroughly clean the residual ink in the absorber. As mentioned earlier, an ink remaining in an absorber may solidify. In this case, it will be necessary to redissolve the solidified ink with the cleaning liquid and discharge it. Redissolving the solidified ink requires introducing the cleaning liquid into the absorber and leaving it in the absorber for a long time to gradually dissolve the solidified ink. Without the ink sufficiently dissolved, the absorber will not be clean even if the cleaning liquid is introduced and discharged multiple times. In a case of choosing to leave the cleaning liquid in the absorber for a long time, the cleaning will require a considerable amount of time, which will lead to another problem of being unable to implement mass production. Moreover, this cleaning method also has a possibility that the cleaning liquid and the residual ink having permeated in the absorber cannot be fully discharged and remain in the absorber. The cleaning liquid having permeated in the absorber is supposed to be sucked out from the ink supply ports to be discharged. However, in a case where an air passage is formed during this suction, it will mostly the air inside the cartridge that will be sucked out, and the cleaning liquid and the residual ink to be discharged will remain inside. In a case where a new ink is introduced with the cleaning liquid and the residual ink still remaining inside, the tonality of the ink changes. This leads to a possibility of failing to form desired images.

Due to the above, reliably making an absorber clean requires detaching the lid member and taking out and cleaning the absorber or replacing it with a new one. For this reason, the present embodiment employs the recycling method of the present disclosure.

### (Recycling Method in Present Embodiment)

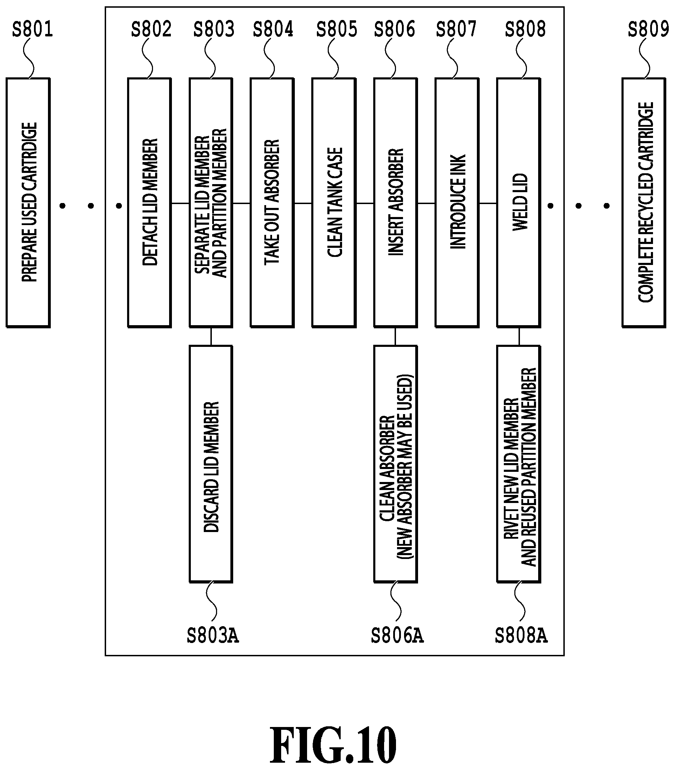

A cartridge recycling method in the present embodiment according to the present disclosure will now be described using Fig. 10. A cartridge recycling process in the present embodiment involves a lid member detachment step S802 of detaching the lid member 150 from the cartridge 100 to a lid member welding step S808 of welding another lid member 150. These steps will be described in detail. Fig. 10 illustrates an excerpt of the cartridge recycling process from the lid member detachment step to the lid member welding step.

The cartridge recycling process firstly starts from a step S801 of preparing a used cartridge 100. Then, the process moves to a lid member detachment step S802 of detaching the lid member 150 after checking the exterior of the cartridge, cleaning the exterior, etc. In this step, the lid member 150 is moved relative to the tank 120 to detach the lid member 150. Then, the process proceeds to a step S803 of separating the lid member 150 and the partition member 140 from each other. In the separation step S803, the lid member 150 and the partition member 140 are separated since the lid member 150 and the partition member 140 have been combined together by riveting. As mentioned earlier, the lid member 150 and the partition member 140 are fixed to each other by this riveting to such an extent as to be easily separable from each other. The partition member 140 can therefore be detached from the lid member 150. The separated lid member 150 is discarded whereas the partition member 140 is reused. Then, in an absorber removal step S804, the absorber 130 having run out of the ink is taken out of the tank 120. Thereafter, a tank cleaning step S805 is performed. In the tank cleaning step S805, the inside of the tank 120 is cleaned. The process then proceeds to an absorber insertion step S806. In the absorber insertion step S806, the absorber 130 taken out in the absorber removal step S804 and cleaned thereafter (S806A) may be inserted into the tank 120. Alternatively, a new absorber may be inserted into the tank in the absorber insertion step S806. In the absorber cleaning step S806A, the absorber 130 is cleaned not only by introducing a cleaning liquid and discharging it by suction in one direction but also immersing the whole absorber 130 in the cleaning liquid to cause the cleaning liquid to thoroughly permeate the absorber 130. The absorber 130 can also be pressed to be deformed in the cleaning liquid to be cleaned. In this way, the residual ink can be thoroughly removed. After the absorber insertion step S806 is an ink introduction step S807, in which the ink soaked into the absorber 130 through introduction needles or the like to be introduced into the tank 120. Then, there is a lid member welding step S808, which is preceded by a step S808A of thermally riveting the lid member 150 and the partition member 140 in order to improve the handleability, as mentioned earlier. In the riveting step S808A, the heat riveting is performed using a new lid member 150 and the partition member 140 separated in the separation step S803. In the heat riveting in this step too, the lid member 150 and the partition member 140 are riveted to such an extent that the lid member 150 can be easily detached with hands in consideration of the future recycling. The lid member 150 and the partition member 140 combined together are placed on the absorber, and the lid member welding step S808 is performed. Since the lid member 150 is new, the welding can be done to tightly close the cartridge. The following step is S809 in which a printing test, packaging, and so on are performed to complete a recycled cartridge.

In the black ink cartridge in the present embodiment described above, the weight of the lid member 150 is approximately 13% of the weight of the whole cartridge with no ink, and the weight of the partition member 140 is approximately 11%. In the case of discarding the lid member 150 and reusing the partition member 140, the recycling rate is approximately 87%. In the case of the lid of the type in the comparative example in which the lid member 150 and the partition member 140 are combined together, the weight of the lid is approximately 19%, and the recycling rate will be 81% if the lid is discarded. Since the lid member 150 is a substantially flat plate-shaped part, the weight of the part that has to be discarded can be reduced as much as possible. This improves the recycling rate as compared to the lid in the comparative example.

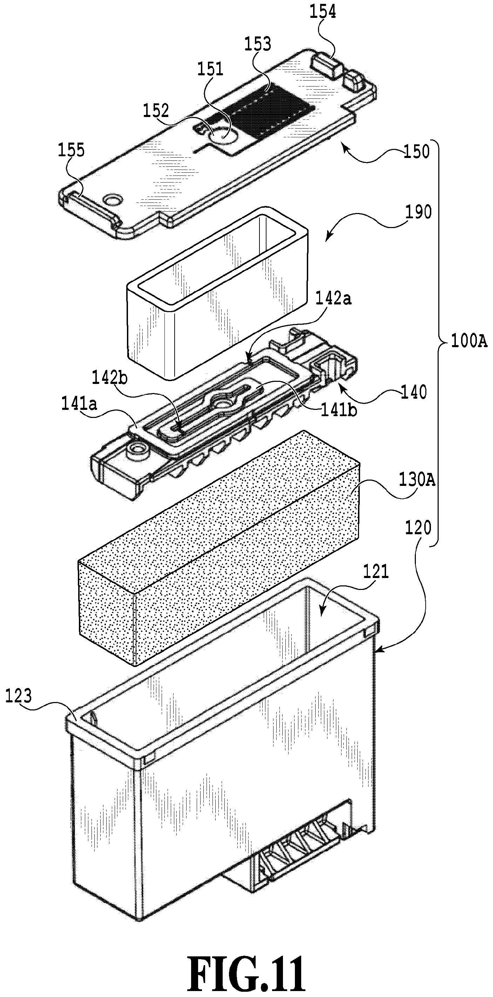

Fig. 11 is an exploded perspective view illustrating a modification of the cartridge of the printing apparatus according to the first embodiment. In the modification, the components other than a tubular member 190 and an absorber 130A have the basic configurations in the present disclosure and the same functions as those in the first embodiment.

As illustrated in Fig. 11, in a cartridge 100A in the modification of the first embodiment, the tubular member 190 may be disposed between the lid member 150 and the partition member 140. The absorber 130A may be half the size of the absorber in the first embodiment. An end of the tubular member 190 abuts on the first lid member wall rib 157a (see Fig. 5) of the lid member 150. The other end of the tubular member 190 abuts on the first partition member wall rib 141a (see Fig. 6) of the partition member 140. The absorber holding ribs 145 of the partition member 140 and the absorber130A abut on each other. As a result, pressing is propagated. In this way, even in a case where the ink to be introduced into the tank 120 is reduced to half, it is still possible to press the absorber 130A with the tubular member 190 located between the lid member 150 and the partition member 140.

### (Second Embodiment)

A second embodiment of the present disclosure will now be described. The basic configurations in the present disclosure and functions and components similar to those in the first embodiment will not be described, and the differences will be described.

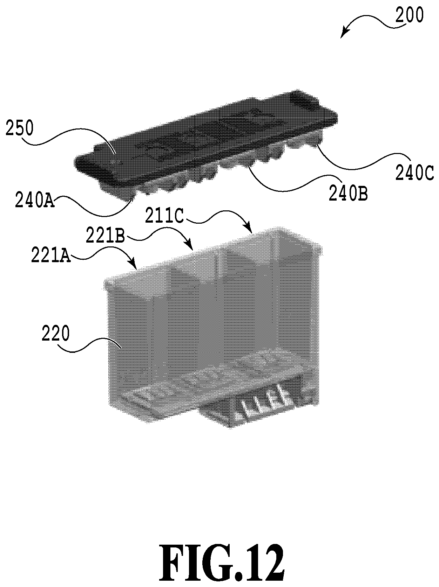

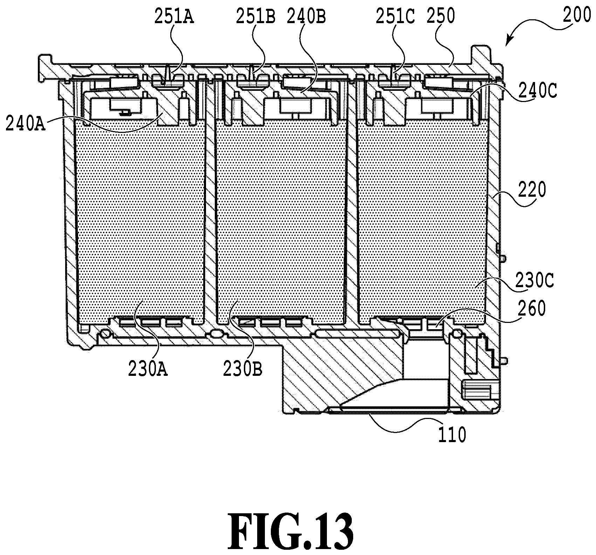

Fig. 12 is an exploded perspective view of a cartridge of a printing apparatus according to the second embodiment. Fig. 13 is a schematic cross-sectional view of the cartridge of the printing apparatus according to the second embodiment. In the second embodiment, the cartridge is of a type containing inks of three colors, and generally is a cartridge 200 for chromatic color inks (cyan, magenta, yellow).

The cartridge 200 includes: a print head 110 that ejects the inks; a tank 220 that contains the inks; three absorbers 230A, 230B, and 230C that absorb and hold the respective inks; and partition members 240A, 240B, and 240C that press the respective absorbers 230. The cartridge 200 also includes a lid member 250 joined to the tank 220, and filters 260 that remove foreign substances inside the tank 220. The absorbers 230A, 230B, and 230C are accommodated in absorber chambers 221A, 221B, and 221C of the tank 220 in abutment with the filters 260, which are for removing foreign substances. The inks inside the tank 220 and the absorbers 230A, 230B, and 230C fluidly communicates with the print head 110 through the filters 260 and ink channels 122. With such a configuration, the inks inside the absorbers 230A, 230B, and 230C can be supplied to the print head 110. The lid member 250 is disposed so as to close the opening of the tank 220, and defines the absorber chambers 221A, 221B, and 221C with the tank 220. The lid member 250 has atmosphere communication ports 251A, 251B, and 251C through which the respective absorber chambers communicate with the atmosphere, and allows air to be taken in therethrough from the outside as the inks inside the tank 220 are consumed by printing. The partition members 240A, 240B, and 240C are disposed between the respective absorbers 230A, 230B, and 230C and the lid member 250, and fix and hold the respective absorbers 230A, 230B, and 230C. The present embodiment too can achieve similar advantages to those of the first embodiment by using similar components to those in the first embodiment. In particular, in a case of reusing the lid member 250, it is necessary to tightly close all of the three chambers. Accordingly, the yield of welding is expected to be lower than that with a single-color cartridge. Considering such a point, the present embodiment can provide a more effective recycling method than the recycling method in the first embodiment. The partition members in the present embodiment are three partition members are provided for respective inks but are not limited to this configuration. A single partition member may be provided, or two or four or more partition members may be provided. Also, the tank in the present embodiment is configured such that three absorber chambers are formed in the tank and three absorbers are accommodated respectively in the three absorber chambers. However, the tank is not limited to this configuration. Multiple absorber chambers may be formed, and multiple absorbers may be accommodated in each absorber chamber.

### (Third Embodiment)

Next, a third embodiment of the present disclosure will be described. The basic configurations in the present disclosure and functions and components similar to those in the first embodiment will not be described, and the differences will be described.

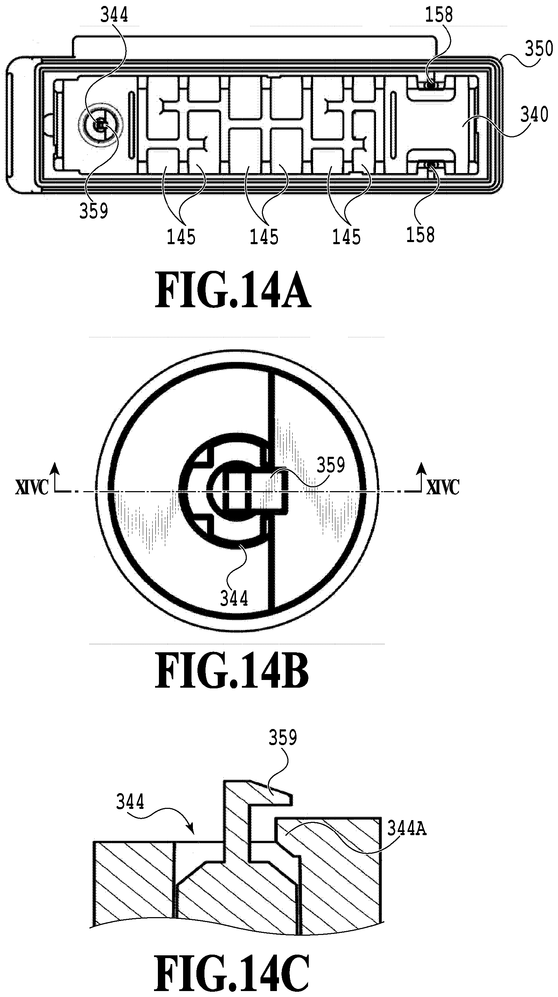

Fig. 14A is a bottom view of a lid member and a partition member of a cartridge of a printing apparatus according to the third embodiment combined together. Fig. 14B is a partial enlarged view of the lid member and the partition member in Fig. 14A at the riveting position. Fig. 14C is a cross-sectional view taken along the XIVC-XIVC line in Fig. 14B.

The method of fixing the lid member 150 and the partition member 140 is not limited to heat riveting of the tip of the riveting pin 159 as described in the present disclosure. As another method, the tip of the riveting pin 159 or another portion of the lid member may be formed in a different shape that allows the lid member and the partition member to be mechanically fitted to each other, and the lid member and the partition member are not joined to each other.

As illustrated in Fig. 14A to 14C, a fitting member 359 with a claw-shaped tip is formed on a lid member 350. In and on a partition member 340, there are formed an opening 344 into which the fitting member 359 can be inserted and a catch portion 344A (see Fig. 14C) to be fitted to the claw-shaped fitting member 359 (see Fig. 14B). The claw-shaped fitting member 359 of the lid member 350 is inserted into the opening 344 so as not to touch the catch portion 344A (see Fig. 14C), and the lid member 350 is turned 90 degrees to fit the fitting member 359 and the catch portion 344A to each other. In this way, the fitting member 359 gets caught on the catch portion 344A of the partition member 340, thus fixing the partition member 340. In a case of separating the lid member 350 and the partition member 340 from each other for recycling, they can be separated by turning the lid member 350 90 degrees and pulling the lid member 350 from the partition member 340.

In a case of using vibration welding as the welding method as in the comparative example described above, the lid member 150 and the partition member 140 are fixed in the vertical direction of the vibration welding. This makes it possible to avoid friction between the lid member wall ribs of the lid member 150 and the partition member wall ribs of the partition member 140 due to abutment between these ribs. Instead of performing heat riveting, one may consider placing the partition member 140 in the tank 120 before the vibration welding of the tank 120 and the lid member 150, positioning and placing the lid member 150 over the partition member 140, and then performing the vibration welding as another method of fixing the lid member 150 and the partition member 140. In this method, the tank 120 and the partition member 140 need to be positioned relative to each other, and a sufficient gap cannot be provided between the tank 120 and the partition member 140. Thus, in the vibration welding, the tank 120 and the partition member 140 may bump against each other. As a result, the ink cartridge may become unusable due to damaging of the tank 120 and the partition member 140 or the like, or the durability of the tank 120 may drop. Moreover, since the ink cartridge is recycled, vibration welding is performed each time the recycling process is performed. Accordingly, damage accumulates in the tank 120 and the partition member 140.

For this reason, by combining the lid member 150 and the partition member 140 together in advance as in the present disclosure, a sufficient gap is provided between the tank 120 and the partition member 140. This prevents the damaging of the tank 120 and the partition member 140 due to the vibration welding.

### (Other Embodiments)

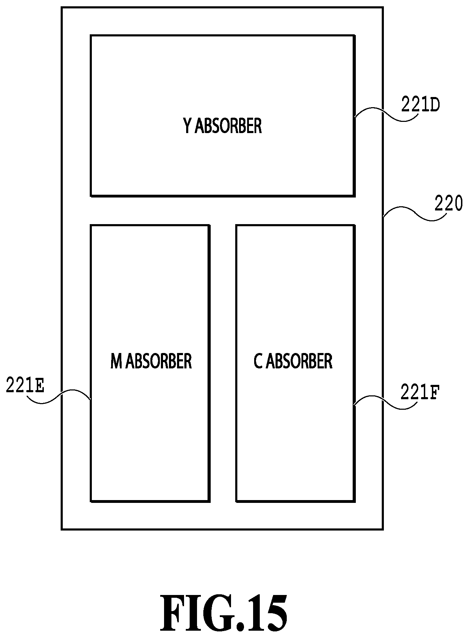

The structures of the lid members and the partition members in the embodiments of the present disclosure are applicable to tanks of any shapes. For example, in the present disclosure, the tank 220 is applicable to cartridges with configurations having multiple absorber chambers, as illustrated in Fig. 12. Fig. 15 is a schematic cross-sectional view of a tank taken along a direction orthogonal to the vertical direction. The present disclosure is applicable to a configuration in which a tank is partitioned into three absorber chambers 221D, 221E, and 221F by a T-shaped wall, and an absorber is disposed in some of them.

## Claims

1. A cartridge (100) comprising:
an absorber (130, 230) configured to hold a liquid;
a tank (120, 230) including an opening and an absorber chamber (121, 221), wherein the absorber (130, 230) is accommodated in the absorber chamber;
a lid member (150, 250) joined to the opening of the tank (120, 230); and
a partition member (140, 240) disposed between the absorber (130, 230) and the lid member (150, 250) located inside the absorber chamber (121, 221), and including a protruding portion (145), wherein
the protruding portion (145) of the partition member (140, 240) abuts on the absorber (130, 230),
the lid member (150, 250) and the partition member (140, 240) are separate members, **characterized in that** the cartridge further comprises
a riveting pin formed on the lid member,
a catch portion formed on the partition member, wherein
the lid member (150, 250) and the partition member (140, 240) are configured to be combined together by being fitted to each other with the riveting pin and the catch portion, wherein the riveting pin is configured to be thermally riveted to form a riveted portion and the riveted portion and the catch portion are fitted to each other.

2. The cartridge according to claim 1, wherein the lid member exerts a force on the partition member in order to press the absorber.

3. The cartridge according to claims 1 or 2, wherein
a welding rib (156) is formed on the surface of the lid member facing the partition member (140, 240) protruding along the outer shape of the lid member (150, 250), and
the lid member (150, 250) and the tank (120, 230) are welded to each other by melting the welding rib (156).

4. The cartridge according to any one of claims 1-3, wherein
an atmosphere communication port through which the absorber chamber may communicate with an atmosphere outside the cartridge is provided substantially at a center of the lid member, and
a circular recess is formed around the atmosphere communication port.

5. The cartridge according to claim 4, wherein
a lid member wall rib is formed on the lid member so as to surround the atmosphere communication port, and
a partition member wall rib is formed on the partition member.

6. The cartridge according to claim 5, wherein a notch is formed at a portion of the partition member wall rib.

7. The cartridge according to claim 5, wherein the lid member wall rib and the partition member wall rib abut on each other.

8. The cartridge according to any one of claims 4-7, wherein the atmosphere communication port communicates with a print head configured to eject liquid.

9. The cartridge according to any one of claims 1-8, the cartridge comprising a tubular member disposed between the lid member and the partition member.

10. The cartridge according to any one of claims 1-9, wherein
the tank consists of one absorber chamber, and
the cartridge consists of one absorber accommodated in the absorber chamber.

11. The cartridge according to any one of claims 1-9, wherein
the tank has a plurality of the absorber chambers, and
the number of the absorbers accommodated in each of the plurality of absorber chambers is two or more.

12. A recycling method which enables recycling of a cartridge after a liquid therein has been consumed, the cartridge including:
an absorber configured to hold a liquid;
a tank including an opening and an absorber chamber, wherein the absorber is accommodated in the absorber chamber;
a lid member joined to the opening of the tank; and
a partition member disposed between the absorber and the lid member located inside the absorber chamber, and including a protruding portion,
the protruding portion of the partition member abutting on the absorber,
the lid member and the partition member being separate members,
a riveting pin being formed on the lid member,
a catch portion being formed on the partition member,
the lid member (150, 250) and the partition member (140, 240) being combined together by being fitted to each other with the riveting pin and the catch portion, wherein the riveting pin is thermally riveted to form a riveted portion and the riveted portion and the catch portion are fitted to each other,
the recycling method comprising:
detaching the lid member from the tank;
separating the lid member and the partition member from each other;
cleaning or replacing the absorber;
cleaning an inside of the tank;
inserting the cleaned absorber, or another absorber with which the absorber was replaced in the replacing, into the tank and introducing a liquid;
fitting a lid member different from the detached lid member to the partition member; and
welding the different lid member and the tank to each other.

## Patentansprüche

1. Kartusche (100), umfassend:
einen Absorber (130, 230), der konfiguriert ist, eine Flüssigkeit zu halten;
einen Tank (120, 230), der eine Öffnung und eine Absorberkammer (121, 221) enthält,
wobei der Absorber (130, 230) in der Absorberkammer untergebracht ist;
ein Deckelelement (150, 250), das mit der Öffnung des Tanks (120, 230) verbunden ist; und
ein Trennelement (140, 240), das zwischen dem Absorber (130, 230) und dem Deckelelement (150, 250) angeordnet ist, sich innerhalb der Absorberkammer (121, 221) befindet und einen vorstehenden Abschnitt (145) enthält, wobei
der vorstehende Abschnitt (145) des Trennelements (140, 240) am Absorber (130, 230) anliegt,
das Deckelelement (150, 250) und das Trennelement (140, 240) separate Elemente sind, **dadurch gekennzeichnet, dass** die Kartusche ferner umfasst:
einen Nietstift, der am Deckelelement ausgebildet ist,
einen Rastabschnitt, der am Trennelement ausgebildet ist, wobei
das Deckelelement (150, 250) und das Trennelement (140, 240) konfiguriert sind, miteinander kombiniert zu werden, indem sie mit dem Nietstift und dem Rastabschnitt aneinandergepasst werden, wobei
der Nietstift konfiguriert ist, thermisch vernietet zu werden, um einen vernieteten Abschnitt zu bilden, und der vernietete Abschnitt und der Rastabschnitt aneinandergepasst werden.

2. Kartusche nach Anspruch 1, wobei das Deckelelement eine Kraft auf das Trennelement ausübt, um den Absorber zu drücken.

3. Kartusche nach Anspruch 1 oder 2, wobei
eine Schweißrippe (156) auf der dem Trennelement (140, 240) zugewandten Oberfläche des Deckelelements ausgebildet ist, welche entlang der Außenform des Deckelelements (150, 250) vorsteht, und
das Deckelelement (150, 250) und der Tank (120, 230) durch Schmelzen der Schweißrippe (156) miteinander verschweißt sind.

4. Kartusche nach einem der Ansprüche 1 bis 3, wobei
eine Atmosphärenverbindungsöffnung, durch welche die Absorberkammer mit einer Atmosphäre außerhalb der Kartusche in Verbindung stehen kann, im Wesentlichen an einem Zentrum des Deckelelements vorgesehen ist, und
eine kreisförmige Aussparung um die Atmosphärenverbindungsöffnung ausgebildet ist.

5. Kartusche nach Anspruch 4, wobei
eine Deckelelementwandrippe am Deckelelement so ausgebildet ist, dass sie die Atmosphärenverbindungsöffnung umgibt, und
eine Trennelementwandrippe am Trennelement ausgebildet ist.

6. Kartusche nach Anspruch 5, wobei eine Kerbe an einem Abschnitt der Trennelementwandrippe ausgebildet ist.

7. Kartusche nach Anspruch 5, wobei die Deckelelementwandrippe und die Trennelementwandrippe aneinander anliegen.

8. Kartusche nach einem der Ansprüche 4 bis 7, wobei die Atmosphärenverbindungsöffnung mit einem Druckkopf in Verbindung steht, der konfiguriert ist, Flüssigkeit auszustoßen.

9. Kartusche nach einem der Ansprüche 1 bis 8, wobei die Kartusche ein röhrenförmiges Element umfasst, das zwischen dem Deckelelement und dem Trennelement angeordnet ist.

10. Kartusche nach einem der Ansprüche 1 bis 9, wobei
der Tank aus einer Absorberkammer besteht, und
die Kartusche aus einem Absorber besteht, welcher in der Absorberkammer untergebracht ist.

11. Kartusche nach einem der Ansprüche 1 bis 9, wobei
der Tank mehrere Absorberkammern aufweist, und
die Anzahl der Absorber, die in jeder der mehreren Absorberkammern untergebracht sind, zwei oder mehr beträgt.

12. Recyclingverfahren, welches das Recycling einer Kartusche ermöglicht, nachdem eine Flüssigkeit darin verbraucht worden ist, wobei die Kartusche enthält:
einen Absorber, der konfiguriert ist, eine Flüssigkeit zu halten;
einen Tank, der eine Öffnung und eine Absorberkammer enthält, wobei der Absorber in der Absorberkammer untergebracht ist;
ein Deckelelement, welches mit der Öffnung des Tanks verbunden ist; und
ein Trennelement, das zwischen dem Absorber und dem Deckelelement angeordnet ist, sich innerhalb der Absorberkammer befindet und einen vorstehenden Abschnitt enthält,
wobei der vorstehende Abschnitt des Trennelements am Absorber anliegt,
wobei das Deckelelement und das Trennelement separate Elemente sind,
einen Nietstift, der am Deckelelement ausgebildet ist,
einen Rastabschnitt, der am Trennelement ausgebildet ist,
wobei das Deckelelement (150, 250) und das Trennelement (140, 240) miteinander kombiniert werden, indem sie mit dem Nietstift und dem Rastabschnitt aneinandergepasst werden, wobei der Nietstift thermisch vernietet wird, um einen vernieteten Abschnitt zu bilden, und der vernietete Abschnitt und der Rastabschnitt aneinandergepasst werden,
wobei das Recyclingverfahren umfasst:
Lösen des Deckelelements vom Tank;
Trennen des Deckelelements und des Trennelements voneinander;
Reinigen oder Ersetzen des Absorbers;
Reinigen eines Inneren des Tanks;
Einfügen des gereinigten Absorbers oder eines anderen Absorbers, mit welchem der Absorber beim Ersetzen ersetzt wurde, in den Tank und Einbringen einer Flüssigkeit;
Zusammenpassen eines sich vom gelösten Deckelelement unterscheidenden Deckelelements und des Trennelements; und
Verschweißen des sich unterscheidenden Deckelelements und des Tanks miteinander.

## Revendications

1. Cartouche (100) comprenant :
un absorbeur (130, 230) conçu pour contenir un liquide ;
un réservoir (120, 230) incluant une ouverture et une chambre d'absorbeur (121, 221), dans laquelle l'absorbeur (130, 230) est reçu dans la chambre d'absorbeur ;
un élément couvercle (150, 250) relié à l'ouverture du réservoir (120, 230) ; et
un élément cloison (140, 240) disposé entre l'absorbeur (130, 230) et l'élément couvercle (150, 250) situé à l'intérieur de la chambre d'absorbeur (121, 221), et
incluant une partie saillante (145), dans laquelle
la partie saillante (145) de l'élément cloison (140, 240) est en butée sur l'absorbeur (130, 230),
l'élément couvercle (150, 250) et l'élément cloison (140, 240) sont des éléments séparés, **caractérisés en ce que** la cartouche comprend en outre
une broche de rivetage formée sur l'élément couvercle,
une partie d'accrochage formée sur l'élément cloison, dans laquelle
l'élément couvercle (150, 250) et l'élément cloison (140, 240) sont conçus pour être combinés ensemble en étant montés l'un sur l'autre avec la broche de rivetage et la partie d'accrochage, dans laquelle la broche de rivetage est conçue pour être rivetée thermiquement pour former une partie rivetée et la partie rivetée et la partie d'accrochage sont montées l'une sur l'autre.

2. Cartouche selon la revendication 1, dans laquelle l'élément couvercle exerce une force sur l'élément cloison afin de presser l'absorbeur.

3. Cartouche selon la revendication 1 ou 2, dans laquelle une nervure de soudage (156) est formée sur la surface de l'élément couvercle faisant face à l'élément cloison (140, 240) faisant saillie le long de la forme externe de l'élément couvercle (150, 250), et
l'élément couvercle (150, 250) et le réservoir (120, 230) sont soudés l'un à l'autre par fusion de la nervure de soudage (156).

4. Cartouche selon l'une quelconque des revendications 1 à 3, dans laquelle
un orifice de communication avec l'atmosphère à travers lequel la chambre d'absorbeur peut communiquer avec une atmosphère à l'extérieur de la cartouche est disposé sensiblement au centre de l'élément couvercle, et
un évidement circulaire est formé autour de l'orifice de communication avec l'atmosphère.

5. Cartouche selon la revendication 4, dans laquelle
une nervure de paroi d'élément couvercle est formée sur l'élément couvercle de manière à entourer l'orifice de communication avec l'atmosphère, et
une nervure de paroi d'élément cloison est formée sur l'élément cloison.

6. Cartouche selon la revendication 5, dans laquelle une encoche est formée au niveau d'une partie de la nervure de paroi d'élément cloison.

7. Cartouche selon la revendication 5, dans laquelle la nervure de paroi d'élément couvercle et la nervure de paroi d'élément cloison sont en butée l'une sur l'autre.

8. Cartouche selon l'une quelconque des revendications 4 à 7, dans laquelle l'orifice de communication avec l'atmosphère communique avec une tête d'impression conçue pour éjecter un liquide.

9. Cartouche selon l'une quelconque des revendications 1 à 8, la cartouche comprenant un élément tubulaire disposé entre l'élément couvercle et l'élément cloison.

10. Cartouche selon l'une quelconque des revendications 1 à 9, dans laquelle
le réservoir est constitué d'une chambre d'absorbeur, et la cartouche est constituée d'un absorbeur reçu dans la chambre d'absorbeur.

11. Cartouche selon l'une quelconque des revendications 1 à 9, dans laquelle
le réservoir présente une pluralité de chambres d'absorbeur, et
le nombre d'absorbeurs reçus dans chacune de la pluralité de chambres d'absorbeur est de deux ou plus.

12. Procédé de recyclage qui permet de recycler une cartouche après qu'un liquide y ait été consommé, la cartouche incluant :
un absorbeur conçu pour contenir un liquide ;
un réservoir incluant une ouverture et une chambre d'absorbeur, dans lequel l'absorbeur est reçu dans la chambre d'absorbeur ;
un élément couvercle relié à l'ouverture du réservoir ; et
un élément cloison disposé entre l'absorbeur et l'élément couvercle situé à l'intérieur de la chambre d'absorbeur, et incluant une partie saillante,
la partie saillante de l'élément cloison étant en butée sur l'absorbeur,
l'élément couvercle et l'élément cloison étant des éléments distincts,
une broche de rivetage étant formée sur l'élément couvercle, une partie d'accrochage étant formée sur l'élément cloison, l'élément couvercle (150, 250) et l'élément cloison (140, 240) étant combinés entre eux en étant montés l'un sur l'autre avec la broche de rivetage et la partie d'accrochage, dans lequel la broche de rivetage est rivetée thermiquement pour former une partie rivetée et la partie rivetée et la partie d'accrochage sont montées l'une sur l'autre,
le procédé de recyclage comprenant :
le détachement de l'élément couvercle du réservoir ;
la séparation de l'élément couvercle et de l'élément cloison l'un de l'autre ;
le nettoyage ou le remplacement de l'absorbeur ;
le nettoyage d'un intérieur du réservoir ;
l'insertion de l'absorbeur nettoyé, ou d'un autre absorbeur par lequel l'absorbeur a été remplacé lors du remplacement, dans le réservoir et l'introduction d'un liquide ;
le positionnement d'un élément couvercle différent de l'élément couvercle détaché sur l'élément cloison ; et
le soudage de l'élément de couvercle et du réservoir l'un à l'autre.
